# EUROPÄISCHE PATENTSCHRIFT

(11) **EP 1 104 615 B1**
(45) Veröffentlichungstag und Bekanntmachung des Hinweises auf die Patenterteilung: **08.04.2009**
(21) Anmeldenummer: 99952250.1
(22) Anmeldetag: 03.08.1999
(51) Int. Cl.: H04M 1/725, H04W 72/06, H04B 17/00

(54) **ERMITTLUNG DER NUTZBARKEIT EINES FUNKKANALS**
DETERMINATION OF THE OPERABILITY OF A RADIO CHANNEL
DETERMINATION DE L'EXPLOITABILITE D'UN CANAL RADIO

(30) Priorität: 12.08.1998 DE 19836575
(43) Veröffentlichungstag der Anmeldung: 06.06.2001
(73) Patentinhaber: SIEMENS AKTIENGESELLSCHAFT, 80333 München (DE)
(72) Erfinder: KAMPERSCHROER, Erich, D-46499 Hamminkeln (DE); BENZ, Michael, D-13629 Berlin (DE); BOLINTH, Edgar, D-41189 Mönchengladbach (DE); FÄRBER, Michael, D-82515 Wolfratshausen (DE); KLEIN, Anja, D-10709 Berlin (DE); KOTTKAMP, Meik, D-81369 München (DE); SCHWARK, Uwe, D-46399 Bocholt (DE); SITTE, Armin, D-10405 Berlin (DE); ULRICH, Thomas, D-13505 Berlin (DE)
(86) Internationale Anmeldenummer: PCT/DE1999/002383
(87) Internationale Veröffentlichungsnummer: WO 2000/010312

(56) Entgegenhaltungen:
- WO-A-97/47147
- US-A- 5 483 666

## Beschreibung

Die Erfindung betrifft ein Verfahren zum Ermitteln der Nutzbarkeit zumindest eines Funkkanals in einem Funk-Kommunikationssystem, insbesondere in einem Mobilfunksystem. Die Erfindung betrifft ferner eine Sende- und/oder Empfangsstation für ein Funk-Kommunikationssystem, insbesondere eine Basisstation oder Mobilstation für ein Mobilfunksystem, zum Senden und/oder Empfangen von Kommunikationsinformation, die über eine Funkschnittstelle übermittelt wird.

Es ist bekannt, in Funk-Kommunikationssystemen physikalische Kanäle zur Übertragung von Kommunikationsinformation zu nutzen. Durch Nutzung dieser physikalischen Kanäle wird die Kommunikationsinformation, insbesondere Sprechdaten oder Computerdaten, über eine Luftschnittstelle von einer Sendestation zu einer Empfangsstation übermittelt. Parameter der physikalischen Kanäle sind beispielsweise in einem TDMA (Time Division Multiple Access)-Funk-Kommunikationssystem ein bestimmter Zeitschlitz, in einem FDMA (Frequency Division Multiple Access)-Funk-Kommunikationssystem eine bestimmte Trägerfrequenz, die bei der Übermittlung der Kommunikationsinformation genutzt wird, und in einem CDMA (Code Division Multiple Access)-Funk-Kommunikationssystem ein bestimmter Code, mit dem die Kommunikationsinformation zur Funkübermittlung codiert wird. Kombinationen der bekannten Vielfachzugriffsverfahren TDMA, FDMA und CDMA sind möglich. In einem kombinierten TDMA/FDMA-Funk-Kommunikationssystem beispielsweise ist daher ein physikalischer Funkkanal durch seinen Zeitschlitz und seine Funkfrequenz bzw. Trägerfrequenz definiert.

In bekannten Mobilfunksystemen, insbesondere in dem GSM (Global System for Mobile Telecommunication), wird die Vergabe der Funkkanäle, über die zwischen einer bestimmten Basisstation und einer bestimmten Mobilstation Kommunikationsinformation übertragen werden kann, zentral durch eine Koordinationseinheit vergeben. Die Koordinationseinheit steuert die einzelnen Steuereinheiten der in dem GSM betriebenen Basisstationen an und weist ihnen die Funkkanäle zu.

Bekannt sind aber auch Funk-Kommunikationssysteme, die im sogenannten unkoordinierten Betrieb arbeiten. In solchen Systemen werden die Funkkanäle nicht zentral für das gesamte System vergeben, sondern suchen sich vielmehr die an einer Funkverbindung beteiligten Stationen die Funkkanäle selbst aus einem vorhandenen Pool von verfügbaren Funkkanälen aus. Ein Beispiel für eine Station, die im unkoordinierten Betrieb arbeitet, ist die Mobilstation eines Mobilfunksystems nach dem DECT-Standard.

Bemerkt die Mobilstation beispielsweise, daß die Bitfehlerrate auf einem Empfangskanal einen zulässigen Grenzwert überschritten hat, wählt sie aus einer Liste von verfügbaren Funkkanälen einen Funkkanal aus und leitet einen Wechsel von dem bisher genutzten Funkkanal zu dem ausgewählten Funkkanal ein. Der Wechsel erfolgt mit Hilfe von bekannten, festgelegten Protokollen, nach denen Signalisierungsinformation zwischen der Mobilstation und der zugehörigen Basisstation ausgetauscht wird.

Es ist weiterhin bekannt, daß eine solche Liste, die Daten über die Nutzbarkeit von verfügbaren Funkkanälen enthält, nach folgendem Verfahren erstellt wird: Über eine Empfangseinrichtung einer Sende- und/oder Empfangsstation wird zumindest ein Beobachtungs-Funkkanal beobachtet, der momentan nicht zum Senden oder Empfangen der Kommunikationsinformation genutzt wird, an deren Übermittlung die Sende- und/oder Empfangsstation beteiligt ist. Zur Beobachtung des Beobachtungs-Funkkanals wird über einen Empfänger, der auf den Beobachtungs-Funkkanal abgestimmt ist, die Empfangsfeldstärke gemessen. Die Empfangsfeldstärke hat im allgemeinen einen Wert größer als Null. Ursachen dafür sind beispielsweise Interferenzen aufgrund von Funkkanälen gleicher oder annähernd gleicher Frequenz; die auf anderen Übertragungsstrecken desselben oder eines anderen Funk-Kommunikationssystems genutzt werden, sonstige Störsignale, die auf der eingestellten Frequenz an der Empfangseinrichtung eintreffen, oder ein Grundpegel, der der Empfangseinrichtung und/oder einer nachgeschalteten Einrichtung immanent ist. Aus diesem Grund wird ein Höchstwert für die Feldstärke festgelegt, die bei der Messung des Beobachtungs-Funkkanals maximal erreicht werden darf. Überschreitet die Feldstärke diesen Höchstwert, wird der Beobachtungs-Funkkanal in der Liste der nutzbaren Funkkanäle als belegt bzw. nicht nutzbar markiert. Um die Liste zu aktualisieren, wird die Messung der Feldstärke wiederholt und jeweils wieder geprüft, ob der Höchstwert überschritten ist. Dementsprechend wird bei jeder Messung der Eintrag in der Liste derart aktualisiert, daß immer das Ergebnis der letzten, aktuellsten Messung in der Liste eingetragen ist.

Es ist bekannt, auf die gleiche, vorstehend beschriebene Weise auch die Wahl eines Funkkanals zu treffen, wenn noch keine Funkverbindung besteht, sondern erst aufgebaut werden soll. Weiterhin ist es bekannt, nicht nur einen Beobachtungs-Funkkanal zu beobachten, sondern alle zur Verfügung stehenden Funkkanäle zu beobachten, die von der messenden Station momentan nicht selbst genutzt werden. So stehen beispielsweise in einem Funk-Kommunikationssystem nach dem DECT-Standard für die Downlink-Verbindung von einer Basisstation zu einer Mobilstation insgesamt 120 physikalische Kanäle zur Verfügung, die über jeweils 12 Zeitschlitze von 10 Trägerfrequenzen verteilt sind. In diesem TDMA/FDMA-basierten System sind also von einer Mobilstation bis zu 120 physikalische Kanäle zu beobachten.

Insbesondere aus der festleitungsgestützten Kommunikationstechnik, bei der Kommunikationsinformation über feste Übertragungsleitungen wie Glasfaserkabel oder Kupferkabel übertragen wird, ist es bekannt, die Kommunikationsinformation jeweils in einzelne Informationspakete zu unterteilen und die Informationspakete nacheinander in zeitlichem Abstand über die Festleitungen zu übertragen. Für zukünftige Funk-Kommunikationssysteme, wie beispielsweise das UMTS (Universal Mobile Telecommunication System), wird überlegt, ebenfalls die Übermittlung von Informationspaketen zuzulassen. Folglich ist es möglich, daß auf einigen oder allen genutzten Funkkanälen Kommunikationsinformation nur zeitweise übertragen wird. Weiterhin wird in diesem Fall selbst auf genutzten Funkkanälen zumindest zeitweise nur eine geringe elektrische Feldstärke vorhanden sein. Bei dem bekannten Verfahren zur Ermittlung der Nutzbarkeit eines Funkkanals, bei dem jeweils aus der letzten Messung der Feldstärke eines Beobachtungs-Funkkanals auf die Nutzbarkeit geschlossen wird, kann es somit zu falschen Schlußfolgerungen kommen. Findet die letzte Messung der Feldstärke eines Beobachtungs-Funkkanals genau in der Sendepause zwischen zwei übertragenen Informationspaketen statt, wird fälschlicherweise festgestellt, daß der Beobachtungs-Funkkanal frei ist und damit für eine neu aufzubauende oder bestehende Funkverbindung genutzt werden kann.

Bei bestehenden und auch bei zukünftigen Funk-Kommunikationssystemen werden in den Sende- und/oder Empfangsstationen Schwingquarze eingesetzt, aus deren jeweils konstanter Schwingungsfrequenz die Zeitbasis für ein TDMA-Vielfachzugriffssystem abgeleitet wird. In der Praxis sind jedoch die Schwingungsfrequenzen der einzelnen in dem System verwendeten Schwingquarze nicht genau gleich groß. Aus diesem Grund kommt es häufig vor, daß aus Sicht einer Sende- und/oder Empfangsstation, die Beobachtungs-Funkkanäle beobachtet, welche eine gemeinsame Trägerfrequenz haben, genutzte Funkkanäle scheinbar zeitlich driften. Unter zeitlich driften wird die Tatsache verstanden, daß ein Funkkanal, der einem bestimmten Zeitschlitz einer stationsfremden Funkverbindung zugeordnet ist, zu einem ersten, früheren Zeitpunkt mit einem ersten Funkkanal übereinstimmt und zu einem zweiten, späteren Zeitpunkt mit einem zweiten Funkkanal übereinstimmt. Der erste und der zweite Funkkanal sind dabei der beobachtenden Station zur Verfügung stehende, voneinander verschiedene Funkkanäle, die verschiedenen Zeitschlitzen derselben Trägerfrequenz zugeordnet sind. Aus Sicht der beobachtenden Station driftet also der stationsfremde Funkkanal zeitlich über die eigenen Zeitschlitze hinweg.

Aus der WO 97/47147 Funk-Telekommunikationssystem bekannt, bei dem ein Satz von Kanälen sowohl für eine Funk-Telekommunikation gemäß einem zellularen Telekommunikationssystem als auch eine Funk-Telekommunikation gemäß einem Schnurlos-Telekommunikationssystem vorgesehen ist, wobei ein Mobilteil des Multimode-Funk-Kommunikationssystems, soweit es sich nicht im Funkversorgungsbereich einer Basisstation des Schnurlos-Telekommunikationssystems befindet, einer Basisstation des zellularen Telekommunikationssystems zugeordnet ist. Gerät das Mobilteil in den Funkversorgungsbereich einer Schnurlos-Basisstation, so leitet das Mobilteil eine Registrierungsprozedur zur Registrierung an dieser Basisstation ein, in der u.a. eine Liste mit den vom zellularen Telekommunikationssystem nicht benutzten somit für die Schnurlos-Telekommunikation verfügbaren Kanälen an die Schnurlos-Basisstation übermittelt wird, wobei diese Kanalliste in einem Zustand des Mobilteils, in dem es keine Funkverbindung unterhält, anhand von Feldstärkemessungen der einzelnen Kanäle des Multimode-Funk-Telekommunikationssystems ermittelt wird.

Aus der US 5,453,666 ist ein Verfahren in einem System, in dem Frequenzen (Kanäle) aus einem Frequenzband sowohl von einem Zellular-Telekommunikationssystem als auch von einem Schnurlos-Telekommunikationssystem genutzt werden, bekannt, bei dem ein Scanner eines Zellular-Telekommunikationssystems die Kanäle untersucht, um die für das Zellular-Telekommunikationssystem verfügbaren Frequenzen zu ermitteln, wobei er dazu sequentiell und wiederholt die Feldstärke der Kanäle misst bis er beispielsweise von einem Zeitgeber gestoppt wird.

Aufgabe der vorliegenden Erfindung ist es die Nutzbarkeit zumindest eines Funkkanals in einem Funk-Kommunikationssystem, insbesondere in einem Mobilfunksystem für in dem System zu übertragende diskontinuierliche Informationspakete oder bei in dem System zeitlich driftenden Funkkanälen zu ermitteln.

Die Aufgabe wird durch ein Verfahren mit den Merkmalen des Anspruchs 1 bzw. durch eine Sende- und/oder Empfangsstation mit den Merkmalen des Anspruchs 10 gelöst. Weiterbildungen sind Gegenstand der abhängigen Ansprüche.

Bei dem erfindungsgemäßen Verfahren ist der zumindest eine Funkkanal, dessen Nutzbarkeit ermittelt werden soll, ein Beobachtungs-Funkkanal, dessen Betriebszustand zeitkontinuierlich und/oder wiederholt festgestellt wird. Durch Auswertung der Historie des Betriebszustands wird die Nutzbarkeit des Beobachtungs-Funkkanals ermittelt. Somit ist es insbesondere auch bei zeitlichen driftenden Funkkanälen möglich, zuverlässig die Nutzbarkeit des zumindest einen Beobachtungs-Funkkanals zu ermitteln. Weiterhin kann auch die Nutzung eines Funkkanals für die Übermittlung von Informationspaketen zuverlässig festgestellt werden. Die Auswertung der Historie erfolgt bei den Ausgestaltungen des erfindungsgemäßen Verfahrens in unterschiedlicher Weise, wobei auch einzelne Arten der Auswertung miteinander kombiniert werden können. In jedem Fall stehen bei der Ermittlung der Nutzbarkeit des Beobachtungs-Funkkanals Informationen über die Vergangenheit des Betriebszustands zur Verfügung, so daß mit großer Zuverlässigkeit beispielsweise der Wechsel einer bestehenden Funkverbindung auf einen anderen, nicht anderweitig genutzten Funkkanal möglich ist.

Bei einer Ausgestaltung des erfindungsgemäßen Verfahrens wird bei der Auswertung der Historie ein Mittelwert des Betriebszustands über einen Beobachtungszeitraum ermittelt. Beträgt der Beobachtungszeitraum beispielsweise eine Minute, jeweils gerechnet von dem Zeitpunkt der aktuellsten, letzten Feststellung des Betriebszustands, und wird in dem Beobachtungszeitraum zeitkontinuierlich und/oder mehrfach wiederholt der Betriebszustand festgestellt, lassen sich zuverlässig für die Übertragung von Informationspaketen genutzte Funkkanäle ermitteln. Bei einer Weiterbildung werden Mittelwerte des Betriebszustands über eine Mehrzahl von nacheinander liegenden Beobachtungszeiträumen ermittelt. Auf diese Weise kann beispielsweise zusätzlich die Häufigkeit einer unregelmäßig wiederkehrenden Störung eines Funkkanals ermittelt werden. Tritt eine Störung z.B. nur einmal in einem langen Gesamt-Beobachtungszeitraum auf, kann der entsprechende Beobachtungs-Funkkanal dennoch als nutzbar markiert werden, da eine weitere Störung nicht wahrscheinlich ist und/oder da eine etwaige weitere Störung nicht ins Gewicht fällt. Die während einer solchen weiteren Störung übermittelten Kommunikationsinformationen können beispielsweise auf Anforderung der Empfangsstation nochmals von der Sendestation gesendet werden, so daß die Übertragung insgesamt vollständig ist.

Alternativ oder zusätzlich zu der Bildung einer Mehrzahl von Mittelwerten über nacheinander liegende Beobachtungszeiträume wird bei einer anderen Ausgestaltung eine Vielzahl von Einzelwerten des Betriebszustands, die nacheinander liegende Beobachtungszeitpunkte betreffen, festgestellt. Die Auswertung kann dann in ähnlicher Weise wie bei den Mittelwerten erfolgen.

Bei einer bevorzugten Ausgestaltung wird bei der Feststellung des Betriebszustands der Wert einer für den Betriebszustand des jeweiligen Beobachtungs-Funkkanals charakteristischen Meßgröße bestimmt. Es existieren somit Meßwerte, die beispielsweise mit einem Grenzwert verglichen werden können. Bei einer Weiterbildung wird bei der Auswertung der Historie festgestellt, ob in einem Beobachtungszeitraum die Meßgröße einen vorgegebenen Grenzwert erreicht bzw. über- oder unterschritten hat. Ist dies der Fall, wird beispielsweise der Beobachtungs-Funkkanal als nicht nutzbar markiert. Alternativ kann der Beobachtungs-Funkkanal erst nach mehrmaligem Erreichen des Grenzwerts bzw. Über- oder Unterschreiten des Grenzwerts als nicht nutzbar markiert werden. Weiterhin wird bei einer Weiterbildung alternativ oder zusätzlich festgestellt, ob ein Mittelwert der charakteristischen Meßgröße über einen Beobachtungszeitraum oder mehrere Mittelwerte über jeweils einen Beobachtungszeitraum den vorgegebenen Grenzwert oder einen zweiten, vorgegebenen Grenzwert erreicht haben bzw. über- oder unterschritten haben. Soll bei dieser Weiterbildung die Nutzbarkeit eines Funkkanals mit besonders hoher Zuverlässigkeit ermittelt werden, darf in einem ersten, kürzeren Beobachtungszeitraum kein einzelner Meßwert den Grenzwert erreicht bzw. über- oder unterschritten haben und darf der Mittelwert bzw. keiner der Mittelwerte in einem zweiten, längeren Beobachtungszeitraum den zweiten vorgegebenen Grenzwert erreicht bzw. über- oder unterschritten haben. Sinnvolle Werte für die Länge der vorgegebenen Beobachtungszeiträume liegen beispielsweise bei 3 Sekunden für den ersten, kürzeren Zeitraum und bei 10 Sekunden oder 1 Minute für den zweiten, längeren Beobachtungszeitraum. Auch hierbei ist es vorteilhaft, wenn bei der Auswertung der Historie eine einzelne kurzzeitige Schwankung der Meßgröße unberücksichtigt bleibt. Gründe hierfür sind bereits vorstehend genannt worden.

Bei einer weiteren Ausgestaltung des erfindungsgemäßen Verfahrens, bei der jeweils der Betriebszustand einer Mehrzahl der Beobachtungs-Funkkanäle festgestellt wird, wird bei der Auswertung der Historie eine Korrelation der zeitlichen Entwicklung des Betriebszustands zumindest eines Teils der Beobachtungs-Funkkanäle ermittelt. Wird eine hohe Korrelation beispielsweise von zwei oder mehreren Funkkanälen festgestellt, die physikalische Kanäle eines TDMA (Time Division Multiple Access)-Funk-Kommunikationssystems sind, kann aus der Korrelation der zeitlichen Entwicklung der Beobachtungs-Funkkanäle, die dieselbe Funkfrequenz haben, eine zeitliche Drift eines Funkkanals festgestellt werden. Außer der Korrelation der zeitlichen Entwicklung wird alternativ oder zusätzlich der zeitliche Abstand des Auftretens von Störsignalen auf Beobachtungs-Funkkanälen derselben Frequenz betrachtet und ausgewertet. Dieser Vorgehensweise liegt der Gedanke zugrunde, daß die zeitliche Drift eines Funkkanals mit ungefähr konstanter Driftgeschwindigkeit erfolgt.

Wird eine solche zeitlich konstante Driftgeschwindigkeit festgestellt, wird auf das Vorliegen eines zeitlich driftenden Funkkanals geschlossen. Dementsprechend werden entweder alle von der Drift betroffenen Funkkanäle als nicht nutzbar markiert, oder wird vorausberechnet, welche Funkkanäle in welchem Zeitraum nicht nutzbar sein werden. In beiden Fällen ist es möglich, aber nicht erforderlich, daß alle Funkkanäle derselben Frequenz beobachtet werden, d.h. Beobachtungs-Funkkanäle sind. Vielmehr reicht es aus, eine Mehrzahl der Funkkanäle gleicher Frequenz, beispielsweise drei oder vier Funkkanäle, zu beobachten. Den Beobachtungs-Funkkanälen sind vorzugsweise aufeinander folgende Zeitschlitze der gemeinsamen Funkfrequenz zugeordnet.

Vorzugsweise findet eine Speicherung der Informationen statt, die bei der Beobachtung des zumindest einen Beobachtungs-Funkkanals zeitkontinuierlich und/oder wiederholt festgestellt werden. Insbesondere wird wiederholt ein Maß für den Betriebszustand festgestellt und wird jeweils ein entsprechender Wert in ein Datenfeld eines Datenspeichers zur Speicherung der zeitlichen Entwicklung des Betriebszustands abgespeichert. Beispielsweise durch eine in einer beobachtenden Sende- und/oder Empfangsstation vorgesehene Auswertungseinrichtung kann dann auf die in dem Datenfeld abgespeicherten Werte zugegriffen werden und die Nutzbarkeit des Beobachtungs-Funkkanals für das Senden und/oder Empfangen von Kommunikationsinformation ermittelt werden. Die Station weist vorzugsweise eine Empfangseinrichtung auf, über die der zumindest eine Beobachtungs-Funkkanal beobachtbar ist, der momentan nicht zum Senden oder Empfangen der Kommunikationsinformation genutzt wird. Bei der Empfangseinrichtung kann es sich um dieselbe Empfangseinrichtung handeln, über die Kommunikationsinformation empfangen wird, oder es ist z.B. eine zweite Empfangseinrichtung vorhanden, so daß gleichzeitig beobachtet und empfangen werden kann. Im zuerst genannten Fall wird beispielsweise das Empfangen der Kommunikationsinformation zu vorgegebenen und/oder mit der Sendestation abgestimmten Zeitpunkten unterbrochen, so daß in Unterbrechungsphasen eine Beobachtung des zumindest einen Beobachtungs-Funkkanals stattfindet.

Bei einer Weiterbildung sind Register vorhanden, in die jeweils für einen Beobachtungs-Funkkanal der aktuellste festgestellte Wert eingetragen wird, und ist weiterhin eine Ausleseeinheit vorhanden, die die aktuellen Werte aus den Registern ausliest. Anschließend findet eine sofortige Auswertung der ausgelesenen Werte statt, beispielsweise wird die Überschreitung eines Grenzwerts geprüft, und/oder werden die ausgelesenen Werte in eine Speichereinrichtung zum Speichern von Werten, die die Historie des Betriebszustands des zumindest Beobachtungs-Funkkanals wiedergeben, eingeschrieben.

Anhand der beigefügten Zeichnung werden nun Ausführungsbeispiele der Erfindung näher erläutert. Die Erfindung ist jedoch nicht auf diese Ausführungsbeispiele beschränkt. Die einzelnen Figuren der Zeichnung zeigen:
- Fig. 1: eine Tabelle mit nutzbaren und nicht nutzbaren Funkkanälen eines FDMA/TDMA-basierten Systems,
- Fig. 2: ein Diagramm mit sechs Meßwerten, die den Betriebszustand eines Beobachtungs-Funkkanals wiedergeben, und
- Fig. 3: eine Basisstation und eine Mobilstation in einem Mobilfunksystem.

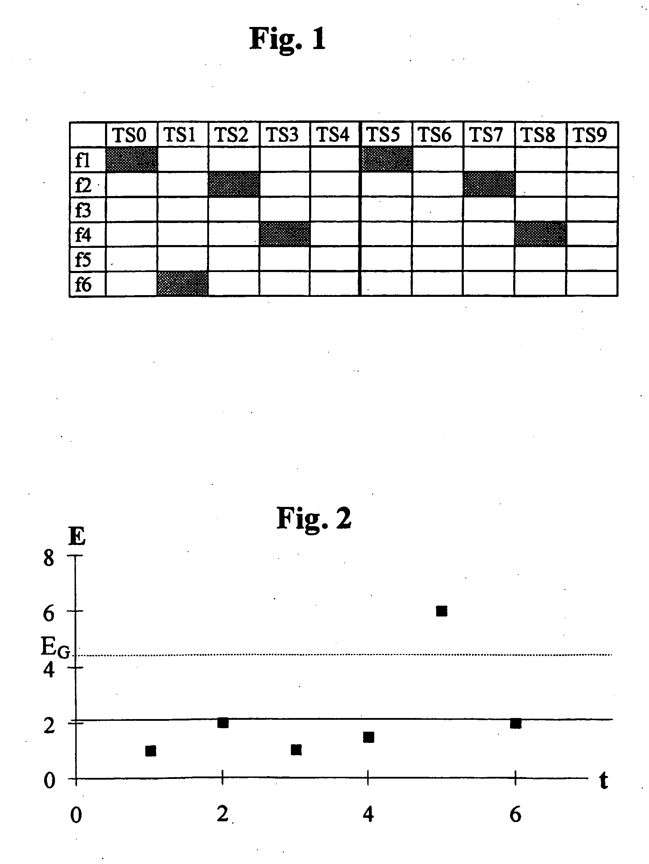

Fig. 1 zeigt eine Tabelle eines FDMA/TDMA-basierten Funk-Kommunikationssystems, die eine Übersicht über die Nutzbarkeit von insgesamt 60 physikalischen Funkkanälen gibt. Die physikalischen Funkkanäle entsprechen jeweils einer Kombination aus einem Zeitschlitz TS und einer Trägerfrequenz f. Auf jeder der Trägerfrequenzen f1...f6 können in 10 Zeitschlitzen TS0...TS9 Kommunikationsinformationen übertragen werden.

Bei einer nicht gezeigten Variante weist das Funk-Kommunikationssystem auch eine CDMA (Code Division Multiple Access)-Komponente auf. In diesem Fall ist eine dreidimensionale Tabelle zu führen, um eine Übersicht über die Nutzbarkeit der Funkkanäle zu haben.

Bei dem der in Fig. 1 dargestellten Tabelle entsprechenden FDMA/TDMA-System handelt es sich um ein System, in dem Duplexverbindungen jeweils zwischen einer Basisstation und einer Mobilstation eines Mobilfunknetzes aufgebaut und betrieben werden. Die jeweilige Downlink-Verbindung, über die von der Basisstation zu der Mobilstation Kommunikationsinformation übertragen wird, und die jeweilige Uplink-Verbindung, über die von der Mobilstation zur Basisstation Kommunikationsinformation übertragen wird, nutzen verschiedene Zeitschlitze derselben Trägerfrequenz. Dabei besteht eine feste Kopplung zwischen dem Downlink-Funkkanal und dem zugehörigen Uplink-Funkkanal. Gemäß der festen Kopplung ist der Zeitschlitz des Downlink-Funkkanals immer einer der Zeitschlitze TS0...TS4 und ist der Zeitschlitz des Uplink-Funkkanals immer einer der Zeitschlitze TS5...TS9. Weiterhin ist jeweils der erste Zeitschlitz TS0 der ersten Zeitschlitzgruppe TS0...TS4 mit dem ersten Zeitschlitz TS5 der zweiten Zeitschlitzgruppe TS5...TS9 gekoppelt, der zweite Zeitschlitz TS1 der ersten Zeitschlitzgruppe mit dem zweiten Zeitschlitz TS6 der zweiten Zeitschlitzgruppe gekoppelt und so weiter. Dabei nutzen die miteinander gekoppelten Funkkanäle, wie bereits gesagt, dieselbe Trägerfrequenz f. Bei Duplexverbindungen reicht es somit aus, lediglich die für Downlink-Verbindungen zur Verfügung stehenden Funkkanäle oder lediglich die für Uplink-Verbindungen zur Verfügung stehenden Funkkanäle zu beobachten.

### Erstes Ausführungsbeispiel

Bei einem ersten Ausführungsbeispiel werden in einem betrachteten Funk-Kommunikationssystem ausschließlich solche Duplexverbindungen und betrieben. Es wird nun eine Mobilstation betrachtet, die Kommunikationsinformation auf dem Funkkanal TS1/f6 von einer Basisstation empfängt. Dementsprechend sendet die Mobilstation auf dem Funkkanal TS6/f6 Kommunikationsinformation an die Basisstation.

Um für den Fall einer Störung zumindest eines der momentan durch die Mobilstation genutzten Funkkanäle Informationen für einen Kanalwechsel zu ermitteln, beobachtet die Mobilstation in regelmäßigen Abständen wiederholt den Betriebszustand aller zur Verfügung stehenden Downlink-Funkkanäle, mit Ausnahme des momentan von ihr genutzten Funkkanals TS1/f6.

Hierzu weist die Mobilstation eine Vielzahl von Empfängern auf, die jeweils auf eine Zeitschlitz-/Frequenzkombination eingestellt sind. Es sind somit mindestens (6x5)-1 Stück Empfänger vorhanden. Jedem Empfänger ist ein Register zugeordnet, in das der jeweils aktuellste Meßwert der durch eine Meßeinrichtung gemessenen Feldstärke des jeweiligen Funkkanals eingetragen wird. Im Multiplexverfahren werden die in den Registern abgelegten Meßwerte der Reihe nach wiederkehrend ausgelesen und in einen Datenspeicher eingeschrieben. In dem Datenspeicher sind die Meßwerte der Feldstärke von jedem der Beobachtungs-Funkkanäle über einen Beobachtungszeitraum der Länge 3 Sekunden abgespeichert, wobei sich der Beobachtungszeitraum jeweils beginnend von dem Zeitpunkt der aktuellsten Messung in die Vergangenheit erstreckt.

Die vorgebene Länge des Beobachtungszeitraums entspricht bei zeitlich konstanten Auslesezyklen, in denen jeweils einmal jedes Register ausgelesen wird, einer festen Anzahl von Speicherplätzen in einem Datenfeld, das jeweils einem BeobachtungsFunkkanal zugeordnet ist. Dabei markiert für jedes Datenfeld der Wert einer Zeigervariablen den ältesten Meßwert, der noch gespeichert ist. Wenn wieder ein neuer Meßwert in das Datenfeld eingetragen wird, wird der älteste Meßwert überschrieben und wird die Zeigervariable auf den nächstfolgenden Speicherplatz in dem Datenfeld gesetzt.

Bemerkt nun die Mobilstation eine Störung auf dem gerade zur Übertragung von Kommunikationsinformation genutzten Funkkanal, beispielsweise durch eine untolerierbar hohe Bitfehlerrate, wird ein Auswertungsprogramm gestartet, das durch Auswertung der in den einzelnen Datenfeldern gespeicherten Meßwerte feststellt, ob ein Beobachtungs-Funkkanal frei ist, d.h. nicht anderweitig in dem Mobilfunksystem genutzt wird oder auf sonstige Weise gestört ist.

Bei einer Variante des ersten Ausführungsbeispiels führt die zugehörige Basisstation entsprechende Messungen aus und findet im Störungsfall ein schneller Informationsaustausch zwischen Basisstation und Mobilstation statt, um ein Paar von nutzbaren, miteinander verkoppelten Funkkanälen für eine Duplexverbindung zu ermitteln. Bei einer zweiten Variante folgert die Mobilstation aus der Nutzbarkeit eines Downlink-Funkkanals, daß auch der zugehörige Uplink-Funkkanal nutzbar ist.

Bei beiden Varianten ist es nicht erforderlich, daß die Historie aller Beobachtungs-Funkkanäle ausgewertet wird. Vielmehr reicht es, die Auswertung so lange fortzusetzen, bis ein freier Funkkanal gefunden ist.

In der Tabelle von Fig. 1 sind die zum Zeitpunkt der Störung anderweitig genutzten oder gestörten Funkkanäle durch graue Unterlegung der jeweiligen Felder markiert. Die Mobilstation führt jedoch keine vollständige Liste der momentan genutzten oder gestörten Funkkanäle, sondern beginnt im Störungsfall erst mit der Auswertung der in den Datenfeldern des Datenspeichers gespeicherten Meßwerte. Es beginnt mit dem Funkkanal TS0/fl, bei dem es feststellt, daß der Funkkanal anderweitig genutzt wird. Die Mobilstation setzt also die Auswertung mit dem Funkkanal TS1/f1 fort und stellt fest, daß dieser Funkkanal nutzbar ist. Es leitet den Wechsel der Funkkanäle von TS1/f6 zu TS1/f1 (Downlink) und von TS6/f6 zu TS6/f1 (Uplink) ein. Dementsprechend kann die Funkverbindung im wesentlichen ohne spürbare Unterbrechung fortgesetzt werden.

### Zweites Ausführungsbeispiel

Das Verfahren gemäß dem zweiten Ausführungsbeispiel wird für Betriebssituationen bevorzugt, in denen die Auswertung der Historie zu lange dauern würde, wenn sie erst im Störungsfall begonnen wird. Im Unterschied zum ersten Ausführungsbeispiel wertet das Auswertungsprogramm jeweils nach Aktualisierung eines Datenfeldes durch Einschreiben eines neuen Meßwerts die gesamte zur Verfügung stehende zeitliche Entwicklung des Beobachtungs-Funkkanals aus und trägt eine entsprechende Markierung in eine Tabelle ein, die der in Fig. 1 gezeigten Tabelle entspricht. Dabei gibt es zwei Markierungsmöglichkeiten. Entweder kommt die Auswertung zu dem Ergebnis, daß der jeweilige Funkkanal derzeit ungestört bzw. nicht anderweitig genutzt wird, oder sie kommt zu dem Ergebnis, daß der Funkkanal gestört bzw. anderweitig genutzt ist. Führt die Auswertung zu dem gleichen Ergebnis wie die zuletzt für denselben Funkkanal durchgeführte Auswertung, braucht der Markierungswert in der Tabelle nicht geändert werden.

Die Markierungswerte für die Uplink-Funkkanäle erhält die Mobilstation entweder von der Basisstation oder sie schließt aus der Störung eines Downlink-Funkkanals, daß auch der zugehörige Uplink-Funkkanal gestört ist. Die vollständige Tabelle der Uplink- und Downlink-Funkkanäle braucht nur entweder von der Mobilstation oder von der Basisstation geführt zu werden.

Bei einer Variante wird die vollständige Tabelle daher nur in der Basisstation geführt und führt die Mobilstation nur eine Tabelle, die die Zeitschlitze TS0...TS4 erfaßt. Weiterhin braucht für den zu dem momentan genutzten Downlink-Funkkanal gehörige Uplink-Funkkanal keine Markierung in die Tabelle eingetragen werden. Die Information, welcher Uplink-Funkkanal momentan genutzt wird, steht ohnehin zur Verfügung.

Andererseits ist es in manchen Betriebssituationen vorteilhaft, die vollständige Liste der gestörten bzw. nicht nutzbaren Uplink- und Downlink-Funkkanäle zu führen, da aus der Ungestörtheit eines zugehörigen Uplink-Funkkanals Rückschlüsse bei der Auswertung der Historie eines möglicherweise gestörten Downlink-Funkkanals gezogen werden können. Liegt nämlich beispielsweise nur ein einziger Meßwert der Feldstärke des Downlink-Funkkanals über dem vorgegebenen Grenzwert und ist der zugehörige Uplink-Funkkanal nicht gestört, wird dieser einzelne Meßwert nicht berücksichtig und der Downlink-Funkkanal wird als frei markiert.

Bei einer anderen Variante wird auf die feste Kopplung der Duplex-Funkkanäle vertraut und wird nur die Liste der Downlink-Funkkanäle oder die Liste der Uplink-Funkkanäle geführt.

Anhand von Fig. 2 wird nun ein Beispiel für die Auswertung der Historie des Betriebszustands gegeben.

### Drittes Ausführungsbeispiel

Fig. 2 zeigt insgesamt sechs Meßwerte für die Feldstärke E, die auf einem Beobachtungs-Funkkanal gemessen wird. Die Feldstärke wird in regelmäßigen Zeitabständen gemessen bzw. es wird in regelmäßigen Zeitabständen ein Register ausgelesen, das aktuelle Meßwerte der Feldstärke enthält.

In der Darstellung von Fig. 2 sind sowohl die Feldstärke E als auch die Zeit t in willkürlichen Einheiten aufgetragen. Dabei entspricht die Zeiteinheit dem zeitlichen Abstand der Meßwerte.

Bei der Auswertung der Historie, die durch die Meßwerte wiedergegeben ist, wird geprüft, ob die Meßwerte den zulässigen Höchstwert E_{G} der Feldstärke überschreiten. In dem in Fig. 2 gezeigten Fall überschreitet nur der fünfte Meßwert den Höchstwert E_{G}. Weiterhin ist in Fig. 2 der Mittelwert aller in dem gezeigten Beobachtungszeitraum genommener Meßwerte dargestellt. Der Mittelwert wird durch eine durchgezogene horizontale Linie etwa bei E=2,25 repräsentiert. Der Mittelwert liegt deutlich unter dem Höchstwert E_{G}. Außer durch den Vergleich mit dem Höchstwert E_{G} kann der Mittelwert auch durch Berechnung der Varianz der Meßwerte im Beobachtungszeitraum und durch Vergleich mit einem zweiten, niedrigeren Höchstwert für die mittlere Feldstärke bewertet werden.

Abhängig von dieser Bewertung wird der Beobachtungs-Funkkanal z.B. als nutzbar oder nicht nutzbar markiert.

Bei dem dritten Ausführungsbeispiel gelten die folgenden Kriterien für die Nutzbarkeit des Beobachtungs-Funkkanals:
- Keiner der Meßwerte im Beobachtungszeitraum darf den Höchstwert E_{G} überschreiten.
- Es werden Mittelwerte jeweils für gleich lange, nacheinander liegende Beobachtungszeiträume der Länge t=6 gebildet. Keiner dieser Mittelwerte darf einen zweiten, vorgegebenen Höchstwert für die mittlere Feldstärke in dem Beobachtungszeitraum überschreiten.

In dem in Fig. 2 dargestellten Fall ist das erste Kriterium nicht erfüllt, so daß der zugehörige Beobachtungs-Funkkanal als nicht nutzbar markiert wird. Jedoch liegt der Mittelwert in dem gezeigten Beobachtungszeitraum unter dem zweiten Grenzwert für die mittlere Feldstärke. Wird daher in folgenden Beobachtungszeiträumen kein Meßwert festgestellt, der über dem Höchstwert E_{G} liegt, und wird auch in den folgenden Beobachtungszeiträumen ein Mittelwert festgestellt, der unter dem zweiten Grenzwert für die mittlere Feldstärke liegt, sind beide Kriterien erfüllt, so daß die Markierung in "nutzbar" geändert werden kann. Im übrigen wird beispielsweise genauso wie in dem ersten Ausführungsbeispiel oder in dem zweiten Ausführungsbeispiel verfahren.

Die Kriterien bei dem dritten Ausführungsbeispiel wurden wie vorstehend beschrieben gewählt, um auch die Übertragung von Informationspaketen auf dem Beobachtungs-Funkkanal feststellen zu können. Der unregelmäßigen zeitlichen Übertragung von Informationspaketen trägt das erste genannte Kriterium Rechnung. Der Tatsache, daß es sich bei einem einzelnen Meßwert, der den Höchstwert E_{G} überschreitet, auch um einen Ausreißer bzw. Meßfehler handeln kann, trägt das zweite Kriterium Rechnung. Somit ist ein praktikabler Kompromiß zwischen der Forderung, zuverlässig die Nutzbarkeit eines Beobachtungs-Funkkanals festzustellen, einerseits und zwischen der Forderung, möglichst immer einen nutzbaren Funkkanal in Reserve zu haben, andererseits gefunden.

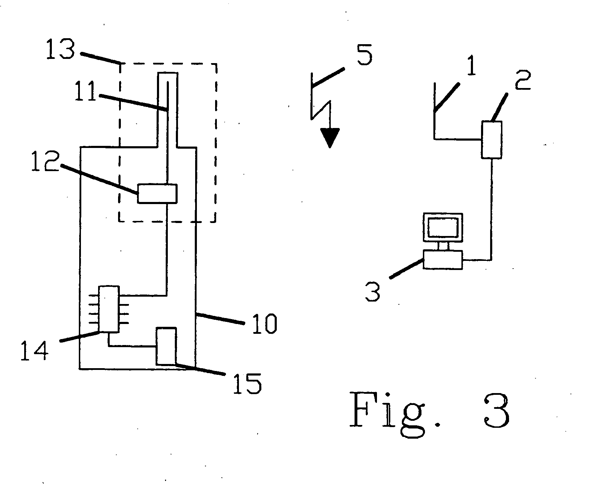

Fig. 3 zeigt eine Basisstation 2 eines Mobilfunksystems, die mit einem Steuerrechner zum Steuern der Basisstation 2 verbunden ist. Weiterhin ist die Basisstation 2 mit einer Antenneneinrichtung 1 zum Senden und Empfangen von Kommunikationsinformation über eine Luftschnittstelle 5 zu einer Vielzahl von Mobilstationen verbunden.

Stellvertretend für die Vielzahl der Mobilstationen ist in Fig. 3 eine Mobilstation 10 dargestellt. Die Mobilstation 10 weist eine Empfangseinrichtung 13 mit einer Antenneneinrichtung 11 und einem Register 12 auf. Über die Antenneneinrichtung 11 beobachtet die Empfangseinrichtung 13 zumindest einen Beobachtungs-Funkkanal, der momentan nicht für das Senden oder Empfangen von Kommunikationsinformation benutzt wird. Hierzu mißt die Empfangseinrichtung 13 die Feldstärke des Beobachtungs-Funkkanals und legt den jeweils aktuellsten Meßwert in dem Register 12 ab.

Weiterhin weist die Mobilstation 10 eine Auslese- und Speichereinrichtung 14 zum Auslesen und Speichern der in dem Register 12 abgelegten Meßwerte in regelmäßigen Zeitabständen auf. In der Auslese- und Speichereinrichtung wird eine Mehrzahl von ausgelesenen Meßwerten, die nacheinander liegenden Meßzeitpunkten entsprechen, gespeichert.

Weiterhin ist in der Mobilstation 10 eine Auswertungseinrichtung 15 vorgesehen, die bei Bedarf, d.h. bei einem gestörten Funkkanal, der momentan zum Senden oder Empfangen von Kommunikationsinformation zu bzw. von der Mobilstation 10 genutzt wird, vor dem Aufbau einer Funkverbindung der Mobilstation 10 und/oder laufend während einer bestehenden Funkverbindung die Historie der Meßwerte für die Feldstärke des Beobachtungs-Funkkanals auswertet, um die Nutzbarkeit des Beobachtungs-Funkkanals zu ermitteln. Die Mobilstation 10. kann insbesondere gemäß einem der vorstehend beschriebenen Ausführungsbeispiele betrieben werden.

Die beschriebenen Ausführungsbeispiele der Erfindung sind insbesondere für den sogenannten unkoordinierten Betrieb in einem zukünftigen Mobilfunksystem, beispielsweise dem UMTS (Universal Mobile Telecommunication System) im TDD (Time Division Duplex)-Betrieb geeignet. Vorteilhaft kann die Erfindung aber auch in anderen Systemen, beispielsweise in Systemen eingesetzt werden, die gemäß dem DECT-Standard betrieben werden, wobei im Unterschied zu der heutzutage üblichen Betriebsweise auch die Übertragung von Paketinformationen zugelassen wird.

## Patentansprüche

1. Verfahren zum Ermitteln der Nutzbarkeit zumindest eines Funkkanals in einem Funk-Kommunikationssystem, insbesondere in einem Mobilfunksystem, wobei der zumindest eine Funkkanal ein Beobachtungs-Funkkanal ist, **dadurch gekennzeichnet, daß** dessen Betriebszustand zeitkontinuierlich und/oder wiederholt über mehrere aufeinanderfolgende Rahmen festgestellt wird und wobei durch Auswertung der sich daraus ergebenden Historie des Betriebszustands die Nutzbarkeit des Beobachtungs-Funkkanals ermittelt wird.

2. Verfahren nach Anspruch 1,
wobei bei der Auswertung der Historie ein Mittelwert des Betriebszustands über einen Beobachtungszeitraum ermittelt wird.

3. Verfahren nach Anspruch 1 oder 2,
wobei bei der Feststellung des Betriebszustands der Wert einer für den Betriebszustand des jeweiligen Beobachtungs-Funkkanals charakteristischen Meßgröße (E) bestimmt wird.

4. Verfahren nach Anspruch 3,
wobei bei der Auswertung der Historie festgestellt wird, ob in einem Beobachtungszeitraum die Meßgröße (E) einen vorgegebenen Grenzwert erreicht bzw. über- oder unterschritten hat.

5. Verfahren nach Anspruch 3 oder 4,
wobei bei der Auswertung der Historie eine kurzzeitige Schwankung der Meßgröße (E) unberücksichtigt bleibt.

6. Verfahren nach einem der Ansprüche 1 bis 5,
wobei jeweils der Betriebszustand einer Mehrzahl der Beobachtungs-Funkkanäle festgestellt wird und wobei bei der Auswertung der Historie eine Korrelation der zeitlichen Entwicklung des Betriebszustands zumindest eines Teils der Beobachtungs-Funkkanäle ermittelt wird.

7. Verfahren nach Anspruch 6,
wobei die Funkkanäle physikalische Kanäle eines TDMA (Time Division Multiple Access)-Funk-Kommunikationssystems sind und wobei aus der Korrelation der zeitlichen Entwicklung von Beobachtungs-Funkkanälen derselben Funkfrequenz eine zeitliche Drift eines Funkkanals festgestellt wird.

8. Verfahren nach einem der Ansprüche 1 bis 7,
wobei wiederholt ein Maß für den Betriebszustand festgestellt wird und jeweils ein entsprechender Wert in ein Datenfeld eines Datenspeichers zur Speicherung der zeitlichen Entwicklung des Betriebszustands abgespeichert wird.

9. Verfahren nach einem der Ansprüche 1 bis 8,
wobei die Funkkanäle physikalische Kanäle eines TDMA (Time Division Multiple Access)/FDMA (Frequency Division Multiple Access)-Funk-Kommunikationssystems sind und wobei der Betriebszustand jedes verfügbaren Funkkanals bekannt ist oder durch Beobachtung des zumindest einen Beobachtungs-Funkkanals festgestellt wird.

10. Verfahren nach Anspruch 4,
wobei alternativ oder zusätzlich festgestellt wird, ob ein Mittelwert der charakteristischen Meßgröße über einen Beobachtungszeitraum oder mehrere Mittelwerte über jeweils einen Beobachtungszeitraum den vorgegebenen Grenzwert oder einen zweiten, vorgegebenen Grenzwert erreicht haben bzw. überschritten oder unterschritten haben.

11. Verfahren nach Anspruch 10,
wobei Messwerte existieren und in einem ersten, kürzeren Beobachtungszeitraum kein einzelner Messwert den Grenzwert erreicht bzw. über- oder unterschritten haben darf und der Mittelwert bzw. keiner der Mittelwerte in einem zweiten, längeren Beobachtungszeitraum den zweiten, vorgegebenen Grenzwert erreicht bzw. überschritten oder unterschritten haben darf.

12. Verfahren nach Anspruch 11,
wobei die Länge der vorgegebenen Beobachtungszeiträume bei 3 Sekunden für den ersten, kürzeren Zeitraum und bei 10 Sekunden oder 1 Minute für den zweiten, längeren Beobachtungszeitraum liegt.

13. Verfahren nach Anspruch 7,
wobei alle Funkkanäle derselben Frequenz beobachtet werden.

14. Verfahren nach Anspruch 7,
wobei drei oder vier Funkkanäle gleicher Frequenz beobachtet werden.

15. Verfahren nach einem der Ansprüche 7, 13 oder 14,
wobei den Beobachtungs-Funkkanälen aufeinander folgende Zeitschlitze der gemeinsamen Funkfrequenz zugeordnet sind.

16. Verfahren nach einem der Ansprüche 7, 13, 14 oder 15,
wobei außer der Korrelation der zeitlichen Entwicklung alternativ oder zusätzlich der zeitliche Abstand des Auftretens von Störsignalen auf den Beobachtungs-Funkkanälen derselben Frequenz betrachtet und ausgewertet wird.

17. Verfahren nach einem der Ansprüche 7, 13, 14, 15 oder 16,
wobei alle von der Drift betroffenen Funkkanäle als nicht nutzbar markiert werden.

18. Verfahren nach einem der Ansprüche 7, 13, 14, 15 oder 16,
wobei vorausberechnet wird, welche Funkkanäle in welchem Zeitraum nicht nutzbar sein werden.

19. Verfahren nach Anspruch 8,
wobei mit einer Auswertung der in den Datenfeldern des Datenspeichers gespeicherten Messwerte erst im Störungsfall begonnen wird.

20. Verfahren nach Anspruch 8,
wobei jeweils nach Aktualisierung eines Datenfeldes durch Einschreiben eines neuen Messwerts die gesamte zur Verfügung stehende zeitliche Entwicklung des Beobachtungs-Funkkanals ausgewertet wird.

21. Verfahren nach Anspruch 20,
wobei in Abhängigkeit von dem Ergebnis der Auswertung eine Markierung in eine Tabelle eingetragen wird und es dabei einen Markierungswert für das Ergebnis der Auswertung gibt, dass der jeweilige Funkkanal derzeit ungestört bzw. nicht anderweitig genutzt wird, und ein anderer Markierungswert für das Ergebnis der Auswertung, dass der Funkkanal gestört bzw. anderweitig genutzt ist.

22. Verfahren nach Anspruch 21,
wobei der Markierungswert in der Tabelle nicht geändert wird, wenn die Auswertung zu dem gleichen Ergebnis wie die zuletzt für denselben Funkkanal durchgeführte Auswertung führt.

23. Verfahren nach Anspruch 10,
wobei der Mittelwert durch den Vergleich mit einem zulässigen Höchstwert (E_{G}) einer Feldstärke bewertet wird.

24. Verfahren nach Anspruch 10,
wobei der Mittelwert durch Berechnung der Varianz von Meßwerten im Beobachtungszeitraum und durch Vergleich mit einem Höchstwert für die mittlere Feldstärke bewertet wird, der niedriger als ein zulässiger Höchstwert (E_{G}) einer Feldstärke ist.

25. Sende- und/oder Empfangsstation (10) für ein Funk-Kommunikationssystem, insbesondere Basisstation oder Mobilstation für ein Mobilfunksystem, zum Senden und/oder Empfangen von Kommunikationsinformation, die über eine Funkschnittstelle (5) übermittelt wird, mit
- einer Empfangseinrichtung (13), über die zumindest ein Beobachtungs-Funkkanal, der momentan nicht zum Senden oder Empfangen der Kommunikationsinformation genutzt wird, durch zeitkontinuierliche und/oder wiederholte Feststellung seines Betriebszustands beobachtbar ist,
- eine Speichereinrichtung (14) zum Speichern von Werten, die die sich aus der Feststellung ergebende die Historie des Betriebszustands des zumindest einen Beobachtungs-Funkkanals wiedergeben, und
- einer Auswertungseinrichtung (15) zum Ermitteln der Nutzbarkeit des Beobachtungs-Funkkanals für das Senden und/oder Empfangen der Kommunikationsinformation durch Auswertung der Historie des Betriebszustands.

## Claims

1. Method for determining the operability of at least one radio channel in a radio communication system, especially in a mobile radio system, the at least one radio channel being an observed radio channel, **characterized in that** the operating state of which is established continuously in time and/or repeatedly over a number of successive frames and in which the operability of the observed radio channel is determined by evaluating the resultant history of the operating state.

2. Method according to Claim 1, in which a mean value of the operating state is determined over a period of observation in the evaluation of the history.

3. Method according to Claim 1 or 2, in which the value of a measured value (E) characteristic of the operating state of the respective observed radio channel is determined in the establishment of the operating state.

4. Method according to Claim 3, in which it is established during the evaluation of the history whether the measured value (E) has reached or exceeded or undershot a predetermined limit value in a period of observation.

5. Method according to Claim 3 or 4, in which a short-time fluctuation of the measured value (E) remains unconsidered in the evaluation of the history.

6. Method according to one of Claims 1 to 5, in which the operating state of a plurality of the observed radio channels is in each case established and in which a correlation of the development of the operating state of at least some of the observed radio channels with time is determined in the evaluation of the history.

7. Method according to Claim 6, in which the radio channels are physical channels of a TDMA (Time Division Multiple Access) radio communication system and in which a temporal drift of a radio channel is established from the correlation of the development of observed radio channels with time which have the same radio frequency.

8. Method according to one of Claims 1 to 7, in which a measure of the operating state is repeatedly established and in each case a corresponding value is stored in a data field of a data memory for storing the development of the operating state with time.

9. Method according to one of Claims 1 to 8, in which the radio channels are physical channels of a TDMA (Time Division Multiple Access)/FDMA (Frequency Division Multiple Access) radio communication system and in which the operating state of each available radio channel is known or is established by observing the at least one observed radio channel.

10. Method according to Claim 4, in which it is established as an alternative or additionally whether a mean value of the characteristic measured value over a period of observation, or a number of mean values over in each case one period of observation, have reached or exceeded or undershot the predetermined limit value or a second predetermined limit value.

11. Method according to Claim 10, in which measurement values exist and no individual measurement value must have reached or exceeded or undershot the limit value in a first, shorter period of observation and the mean value or none or the mean values must have reached or exceeded or undershot the second predetermined limit value in a second, longer period of observation.

12. Method according to Claim 11, in which the length of the predetermined periods of observation is 3 seconds for the first, shorter period and 10 seconds or 1 minute for the second, longer period of observation.

13. Method according to Claim 7, in which all radio channels of the same frequency are observed.

14. Method according to Claim 7, in which three or four radio channels of the same frequency are observed.

15. Method according to on of Claims 7, 13 or 14, in which the observed radio channels are allocated successive timeslots of the common radio frequency.

16. Method according to one of Claims 7, 13, 14 or 15, in which apart from the correlation of the development with time, the time interval between occurrences of interference signals on observed radio channels of the same frequency are observed and evaluated as an alternative or in addition.

17. Method according to one of Claims 7, 13, 14, 15 or 16, in which all radio channels affected by the drift are marked as inoperable.

18. Method according to one of Claims 7, 13, 14, 15 or 16, in which a precalculation is performed which radio channels will be inoperable in which period.

19. Method according to Claim 8, in which an evaluation of the measurement values is stored in the data fields of the data memory is only begun in the case of a disturbance.

20. Method according to Claim 8, in which the total available development of the observed radio channel with time is evaluated in each case after the updating of a data field by writing in a new measurement value.

21. Method according to Claim 20, in which, in dependence on the conclusion of the evaluation, a mark is entered into a table and in this case there is a marked value for the conclusion of the evaluation that the respective radio channel is currently undisturbed or not otherwise used, and another marked value for the conclusion of the evaluation that the radio channel is disturbed or otherwise used.

22. Method according to Claim 21, in which the marked value in the table is not changed if the evaluation leads to the same result as the evaluation last performed for the same radio channel.

23. Method according to Claim 10, in which the mean value is assessed by comparing it with a permissible maximum value (E_{G}) of a field strength.

24. Method according to Claim 10, in which the mean value is assessed by calculating the variance of the measurement values in the period of observation and by comparing it with a maximum value for the mean field strength which is lower than a permissible maximum value (E_{G}) of a field strength.

25. Transmitting and/or receiving station (10) for a radio communication system, especially a base station or mobile station for a mobile radio system, for transmitting and/or receiving communication information which is transmitted via an air interface (5), comprising
- a receiving device (13) via which at least one observed radio channel, which is currently not used for transmitting or receiving the communication information, can be observed by establishing its operating state continuously in time and/or repeatedly,
- a storage device (14) for storing values which reproduce the history of the operating state of the at least one observed radio channel resulting from the establishing, and
- an evaluation device (15) for determining the operability of the observed radio channel for transmitting and/or receiving the communication information by evaluating the history of the operating state.

## Revendications

1. Procédé pour déterminer l'exploitabilité d'au moins un canal radio dans un système de radiocommunication, en particulier dans un système radio mobile, l'au moins un canal radio étant un canal radio d'observation, **caractérisé en ce que** l'état de fonctionnement de celui-ci est constaté en continu dans le temps et/ou de manière répétée sur plusieurs trames successives, et l'exploitabilité du canal radio d'observation étant déterminée par évaluation de l'historique de l'état de fonctionnement qui en résulte.

2. Procédé selon la revendication 1, dans lequel une valeur moyenne de l'état de fonctionnement est déterminée sur une période d'observation lors de l'évaluation de l'historique.

3. Procédé selon la revendication 1 ou 2, dans lequel la valeur d'une grandeur de mesure (E) caractéristique pour l'état de fonctionnement du canal radio d'observation respectif est déterminée à la constatation de l'état de fonctionnement.

4. Procédé selon la revendication 3, dans lequel il est constaté, lors de l'évaluation de l'historique, si la grandeur de mesure (E), dans une période d'observation, a atteint resp. sont passé au-dessus ou en-dessous une valeur limite prédéterminée.

5. Procédé selon la revendication 3 ou 4, dans lequel une variation de courte durée de la grandeur de mesure (E) n'est par prise en considération lors de l'évaluation de l'historique.

6. Procédé selon l'une des revendications 1 à 5, dans lequel l'état de fonctionnement d'une pluralité de canaux radio d'observation est respectivement constaté et, lors de l'évaluation de l'historique, une corrélation de l'évolution temporelle de l'état de fonctionnement d'au moins une partie des canaux radio d'observation est déterminée.

7. Procédé selon la revendication 6,dans lequel les canaux radio sont des canaux physiques d'un système de radiocommunication TDMA (Time Division Multiple Access) et une dérive temporelle d'un canal radio est constatée à partir de la corrélation de l'évolution temporelle de canaux radio d'observation de même fréquence radio.

8. Procédé selon l'une des revendications 1 à 7, dans lequel une mesure de l'état de fonctionnement est constatée à plusieurs reprises et une valeur correspondante est respectivement stockée dans un champ de données d'une mémoire de données pour le stockage de l'évolution temporelle de l'état de fonctionnement.

9. Procédé selon l'une des revendications 1 à 8, dans lequel les canaux radio sont des canaux physiques d'un système de radiocommunication TDMA (Time Division Multiple Access) / FDMA (Frequency Division Multiple Access) et l'état de fonctionnement de chaque canal radio disponible est connu ou constaté par observation de l'au moins un canal radio d'observation.

10. Procédé selon la revendication 4, dans lequel il est constaté, alternativement ou additionnellement, si une valeur moyenne de la grandeur de mesure caractéristique, sur une période d'observation, ou plusieurs valeurs moyennes, chacune sur une période d'observation, ont atteint resp. sont passé au-dessus ou en-dessous de la valeur limite prédéterminée ou une deuxième valeur limite prédéterminée.

11. Procédé selon la revendication 10, dans lequel les valeurs de mesures existent et aucune valeur de mesure individuelle ne peut, dans une première période d'observation plus courte, avoir atteint resp. être passé au-dessus ou en-dessous de la valeur limite, et la valeur moyenne resp. aucune des valeurs moyennes ne peut, dans une deuxième période d'observation plus longue, avoir atteint resp. être passé au-dessus ou en-dessous de la deuxième valeur limite prédéterminée.

12. Procédé selon la revendication 11, dans lequel la longueur des périodes d'observation prédéterminées sont de 3 secondes pour la première période plus courte et de 10 secondes ou de 1 minute pour la deuxième période d'observation plus longue.

13. Procédé selon la revendication 7, dans lequel tous les canaux radio de même fréquence sont observés.

14. Procédé selon la revendication 7, dans lequel trois ou quatre canaux radio de même fréquence sont observés.

15. Procédé selon l'une des revendications 7, 13 ou 14, des créneaux temporels successifs de fréquence radio commune sont affectés aux canaux radio d'observation.

16. Procédé selon l'une des revendications 7, 13, 14 ou 15, dans lequel, outre la corrélation de l'évolution temporelle, alternativement ou additionnellement, 1' intervalle temporelle entre les survenances de signaux perturbateurs sur les canaux radio d'observation de même fréquence temporelle est observée et évaluée.

17. Procédé selon l'une des revendications 7, 13, 14, 15 ou 16, dans lequel tous les canaux radio concernés par la dérive sont marqués comme non exploitables.

18. Procédé selon l'une des revendications 7, 13, 14, 15 ou 16, dans lequel il est calculé d'avance quels canaux radio ne seront pas exploitables dans quelle période.

19. Procédé selon la revendication 8, dans lequel une évaluation des valeurs de mesures stockées dans les champs de données de la mémoire de données ne commençent qu'en cas de perturbation.

20. Procédé selon la revendication 8, dans lequel toute l'évolution temporelle disponible du canal radio d'observation est évaluée après l'actualisation d'un champ de données par inscription d'une nouvelle valeur de mesure.

21. Procédé selon la revendication 20, dans lequel un marquage, en fonction du résultat de l'évaluation, est introduit dans un tableau, et étant données une valeur de marquage pour le résultat de l'évaluation selon lequel le canal radio respectif n'est actuellement pas perturbé resp. utilisé différemment, ainsi qu'une autre valeur de marquage pour le résultat de l'évaluation selon lequel le canal radio est perturbé resp. utilisé différemment.

22. Procédé selon la revendication 21, dans lequel la valeur de marquage dans le tableau n'est pas modifiée lorsque l'évaluation amène au même résultat que l'évaluation effectuée en dernier lieu pour le même canal radio.

23. Procédé selon la revendication 10, dans leque la valeur moyenne est évaluée par la comparaison avec une valeur maximale autorisée (E_{G}) d'une force de champ.

24. Procédé selon la revendication 10, dans lequel la valeur moyenne est évaluée par calcul de la variance de valeurs de mesures dans la période d'observation et par comparaison avec une valeur maximale de la force de champ moyenne, laquelle est inférieure à une valeur maximale autorisée (E_{G}) d'une force de champ.

25. Station émettrice et/ou réceptrice (10) pour un système de radiocommunication, en particulier une station de base ou une station mobile pour un système radio mobile, pour émettre et/ou recevoir une information de communication qui est transmise via une interface radio (5), avec un dispositif récepteur (13) par l'intermédiaire duquel peut être observé au moins un canal radio d'observation, momentanément non exploité pour émettre ou recevoir l'information de communication, par constatation continue dans le temps et/ou répétée de son état de fonctionnement, un dispositif de mémoire (14) pour stocker des valeurs qui reproduisent l'historique de l'état de fonctionnement de l'au moins un canal radio d'observation, laquelle résulte de la constatation, et un dispositif d'évaluation (15) pour déterminer l'exploitabilité du canal radio d'observation pour émettre et/ou recevoir l'information de communication par évaluation de l'historique de l'état de fonctionnement.
